# EUROPÄISCHE PATENTSCHRIFT

(11) **EP 0 615 883 B1**
(45) Veröffentlichungstag und Bekanntmachung des Hinweises auf die Patenterteilung: **11.06.1997**
(21) Anmeldenummer: 94103465.4
(22) Anmeldetag: 08.03.1994
(51) Int. Cl.: B60R 11/02, B66C 13/54, E02F 9/26

(54) **Bedienplatz für Fahrzeuge oder Arbeitsgeräte**
Control panel for vehicles or worktools
Pupitre de commande pour véhicules ou outils de travail

(30) Priorität: 18.03.1993 DE 4308556
(43) Veröffentlichungstag der Anmeldung: 21.09.1994
(73) Patentinhaber: PIETZSCH AUTOMATISIERUNGSTECHNIK GMBH, 76275 Ettlingen (DE)
(72) Erfinder: Pietzsch, Ludwig, Dr., D-76227 Karlsruhe (DE)
(74) Vertreter: Geitz, Heinrich, Dr.-Ing.

(56) Entgegenhaltungen:
- DE-C- 4 001 448
- DE-U- 9 204 392
- JP-A-61 282 139

## Beschreibung

Die Erfindung betrifft einen Bedienplatz für Fahrzeuge oder Arbeitsgeräte, insbesondere für Krananlagen, Schienen oder dergleichen, mit einem Sitz für eine Bedienungsperson, mit einem Monitor eines Kontrollsystems und mit Anzeigeinstrumenten im Sichtbereich sowie wenigstens einem gegebenenfalls Mehrfunktions-Bedienelement im unmittelbaren Zugriffsbereich einer im Sitz aufgenommenen Bedienungsperson, bei dem der Monitor als um zwei im Winkel zueinander verlaufende Achsen schwenk- und neigbares Display ausgebildet und im direkten Zugriffs- und Sichtbereich der Bedienungsperson unabhängig vom Sitz befestigt ist, wobei diesem Display jeweils ein Bedienungstableau zugeordnet ist.

Ein solcher Bedienplatz ist aus dem deutschen Gebrauchsmuster DE-U-92 04 392 vorbekannt. Mit diesem bekannten Bedienplatz sollte insbesondere ein Sessel für Führerstände geschaffen werden, der an die unterschiedlichen Körpergrößen des Bedienpersonals anpaßbar ist und überdies eine Bedienung der Bedienelemente in wechselnden Sitzpositionen zuläßt, wobei hierdurch die Sichtverhältnisse auf die Bedien- und Kontrollorgane des Bedienplatzes möglichst wenig beeinträchtigt werden sollten. Hierzu ist der Sitz auf vielseitige Weise verstellbar.

Im Zusammenhang mit dem beschriebenen Bedienplatz im Speziellen und Anzeigeeinrichtungen von Krananlagen und schweren Baumaschinen im Allgemeinen ergibt sich im Betrieb oftmals ein Problem dahingehend, daß bei entsprechender Sonneneinstrahlung starke Blendungseffekte an den Anzeigeeinrichtungen auftreten können. Im schlimmsten Fall kann dies die Ablesbarkeit der Anzeigeeinrichtungen völlig ausschließen. Um derartige Blendungseffekte und der dadurch bedingten Sichtbeeinträchtigung entgegenzuwirken, sind schon Sonnenschutzblenden verschiedenartigster Ausgestaltung vorgeschlagen worden. Derartige Sonnenblenden sind auch umständlich in der Handhabung und häufig sperrig.

Bei dem vorbekannten Bedienplatz können etwaige Blendeffekte dadurch bekämpft werden, daß das Display über einen Schwenkarm in die jeweils beste und individuell gewünschte Position gebracht werden kann. Zusätzlich kann die Neigung der Bildschirmfläche über ein Bildschirmgelenk eingestellt werden. Nachteilig im Zusammenhang mit dieser Anordnung ist, daß der Schwenkarm bevorzugt fest mit dem Sitz des Bedienplatzes verbunden ist. Die Verstellung des Sitzes hat somit zwangsläufig eine entsprechende Verstellung des Displays zur Folge, so daß anschließend im Hinblick auf die unerwünschte Blendwirkung eine Neueinstellung aller entsprechend eingestellten Anzeigevorrichtungen unter Umständen erforderlich ist.

Gemäß einer anderen Ausführung des vorbekannten Bedienplatzes in Verbindung mit schweren Monitoren ist es auch bekannt, einen separat befestigten Schwenkarm vorzusehen. Bei dieser Ausführung ist es allerdings nachteilig, daß der solcherart freistehend aufgestellte oder aufgehängte Monitor leicht unbeabsichtigt verschwenkt wird, wenn gegen den von außen frei zugänglichen Schwenkarm gestoßen wird. Überdies neigen derartige Schwenkarmlösungen dazu, mit zunehmender Lebensdauer infolge der ungehindert einwirkenden Verschmutzung schwergängig zu werden. Hierunter leidet der Bedienkomfort erheblich.

Ein weiteres Problem derartiger Bedienplätze besteht darin, daß die Anzeigeelemente oftmals einer starken Verschmutzung ausgesetzt sind, die ebenfalls die Ablesbarkeit beeinträchtigt. Diese Effekte werden durch die elektrostatische Anziehung von Staub- und Schmutzteilchen weiter verstärkt. Hierzu ist von dem vorbekannten Bedienplatz ebenfalls bekannt, ein Display mit einer entsprechenden Abdeckung zu versehen. Bei dieser vorbekannten Ausführung ist nachteilig, daß das entsprechende Display nicht mehr relativ zum Sitz des Bedienplatzes verstellt werden kann. Bei diesem Bedienplatz wird somit der Vorteil einer Schmutzabdeckung mit dem Verlust der beschriebenen Einstellmöglichkeiten der Anzeigevorrichtungen bezahlt. Im übrigen handelt es sich bei der vorbekannten Schmutzabdeckung um eine reine Klappabdeckung, die insbesondere im Hinblick auf feinstverteilte Stäube als ungenügend angesehen wird.

Der Erfindung liegt die Aufgabe zugrunde, einen Bedienplatz zu schaffen, dessen Anzeigeeinrichtungen blendfrei einstellbar sind und verbessert schmutz- und staubgeschützt werden können.

Die Lösung dieser Aufgabe gelingt dadurch, daß das Display derart höheneinstellbar ist, daß es in einer Nichtgebrauchsstellung in einem Aufnahmeraum mit einer verschließbaren Einschuböffnung versenkbar ist, wobei die Einschuböffnung mittels des entsprechend schwenkbar angelenkten Bedientableaus vollständig verschließbar ist.

Im Hinblick auf die Verschmutzung derartiger Bedienplätze ist es vorteilhaft, daß das Display des Bedienplatzes in einer Nichtgebrauchsstellung in einem Aufnahmeraum versenkbar ist. In Verbindung mit einer vollständigen Abdeckung der Einschuböffnung des Aufnahmeraums ist hierdurch ein weitaus verbesserter Staubschutz geschaffen, als bei dem vorbekannten Bedienplatz. Darüber hinaus ist hierdurch ein wirksamer Schutz gegen Manipulationen sowohl am Bedientableau wie auch am Monitor gegeben. Dies ist wichtig, da oftmals Bedienplätze von Fahrzeugen oder Arbeitsgeräten ansonsten frei zugänglich sind. Darüber hinaus bietet der Aufnahmeraum für das Display den Vorteil, daß die gesamte Höhenverstellmechanik des Displays ebenfalls innerhalb dieses Aufnahmeraums angeordnet sein kann und somit eine unbeabsichtigte Verstellung, wie sie bei Schwenkarmen möglich ist, ausgeschlossen ist.

Gemäß einer anderen Weiterbildung kann das Display der Anzeige- und Bedieneinheit höheneinstellbar und/oder in einem Aufnahmeraum mit einer mittels einer schwenkbar angelenkten Abdeckung verschließbaren Einschuböffnung versenkbar sein. Dabei hat sich als zweckmäßig erwiesen, wenn das Display auf einem vom Aufnahmeraum und/oder Führungselementen, welche die Höheneinstellbarkeit vermitteln, trennbaren Einschub aufgenommen ist. Dieser Einschub kann auch mit elektrischen Steckkontakten versehen sein, die beim Ein- bzw. Ausbau mit Steckaufnahmen des Aufnahmeraumes oder der Führungselemente selbsttätig in- bzw. außer Kontakt gelangen.

Die Trennbarkeit des Einschubs vom Aufnahmeraum ermöglicht die Entfernung des Displays und bietet daher Schutz vor mißbräuchlicher Benutzung oder auch vor Vandalismus. Letzterem kommt insbesondere bei Baumaschinen Bedeutung zu, weil diese in aller Regel nachts und auch an den Wochenenden nur mäßig gesichert auf den Baustellen zurückbleiben.

Bei einer vorteilhaften Weiterbildung der vorstehend erörternden Ausgestaltung ist das Bedientableau im Bereich einer Kante der Einschuböffnung des Aufnahmeraums schwenkbar angelenkt und dient als abschließbare Abdeckung der Einschuböffnung. Die Anordnung kann zweckmäßigerweise dabei so getroffen sein, daß die Funktionstasten des Bedientableaus auf derjenigen Tableauseite angeordnet sind, die bei in die Einschuböffnung des Aufnahmeraums, also in die Nichtgebrauchsstellung verschwenktem Tableau, zum Aufnahmeraum hinweist.

Eine andere wichtige Ausgestaltung der Erfindung sieht vor, daß die Anzeige- und Bedieneinheit für das Kontrollsystem ein säulenartiges Gehäuse mit einem eine obere Einschuböffnung aufweisenden Aufnahmeraum umfaßt. Dabei ist vorteilhaft, wenn die Anzeige- und Bedieneinheit unmittelbar benachbart zu dem Bedienelement, etwa einem Joystick angeordnet ist und das Bedientableau auf der zum Sitz für eine Bedienungsperson hinweisenden Seite der Einschuböffnung angelenkt ist sowie in seiner handgerecht einrastenden Gebrauchsstellung im unmittelbaren Zugriffsbereich einer im Sitz aufgenommenen Bedienungsperson steht.

Schließlich sieht eine abermalige Ausgestaltung vor, daß in einer Betriebsart das Display sich in beiden Achsen nach vorgebbaren Algorithmen, wie Verkehrsweg, Geschwindigkeit oder dergleichen mehr, automatisch verstellt, bis die Bedienperson die Nachführung unterbricht. Bei einer derartigen Ausbildung erfolgt eine selbsttätige Einstellung des Displays und die Bedienperson vermag die Verstellbewegung zu stoppen, wenn eine für die optimale Einblickposition erreicht ist. Nach der Unterbrechung des Nachführvorganges verharrt das Display in der dann erreichten Position, bis ein erneuter Nachführvorgang eingeleitet wird. Als zweckmäßig hat sich ein Nachführalgorithmus derart erwiesen, daß sich das Display mit maximaler Horizontal- und Vertiaklgschwindigkeit durch wechselweise Horizontal- und Vertiklbewegung von einem unteren Anschlag in Richtung auf einen oberen Anschlag verstellt.

Eine derartige Ausbildung des Bedienplatzes ermöglicht eine sinnvolle Einhandbedienung, indem die Bedienungsperson benötigte Sachinformationen durch Betätigung der Funktionstasten des Bedientableaus abruft, ohne die Hand vom Bedienelement der Anlage lösen zu müssen.

Anhand der beigefügten Zeichnung sollen als Ausführungsbeispiel der Erfindung ein Bedienplatz einer Krananlage und eine Anzeige- und Bedieneinheit eines Kran-Kontrollsystems erläutert werden. In schematischen Ansichten zeigen:
- Fig. 1: in einem Horizontalschnitt durch eine Krankabine einen mit einer Anzeige- und Bedieneinheit ausgestatteten Bedienplatz einer Krananlage in einer Draufsicht,
- Fig. 2: die Anzeige- und Bedieneinheit für sich allein in betriebsbereitem Zustand in einer perspektivischen Ansicht mit Blickrichtung gem. Pfeil II in Fig. 1 und
- Fig. 3: die Anzeige- und Bedieneinheit in einer Ansicht wie in Fig. 2, jedoch in einem nicht betriebsbereiten Zustand.

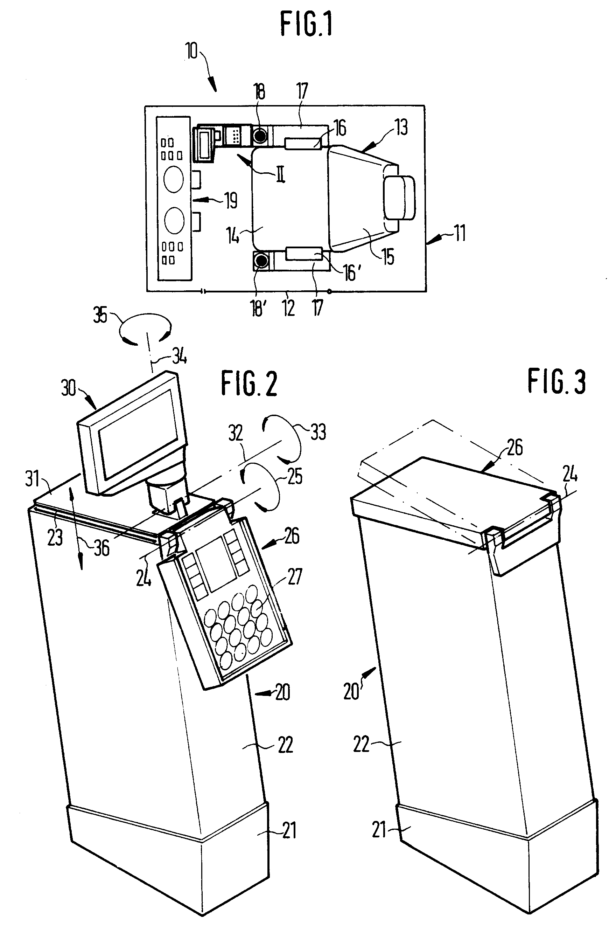

Bei dem in Fig. 1 in seiner Gesamtheit veranschaulichten Bedienplatz handelt es sich um den Fahrstand 10 eines im übrigen nicht dargestellten Mobil-Krans. Dieser Fahrstand ist in einer im wesentlichen rundum verglasten Kabine 11 mit einer Zugangstür 12 aufgenommen und umfaßt einen Sitz 13 mit einem Sitzpolster 14, einer Rückenlehne 15 und je einer seitlichen Armauflage 16, 16' für eine Bedienungsperson.

Beidseitig des Sitzpolsters 14 erstreckt sich unter den Armlehnen 16, 16' je eine Konsole 17, 17' entlang. An den von der Rückenlehne entfernten Enden dieser Konsolen ist jeweils ein Mehrfunktions-Bedienelement in Form eines Joysticks 18, 18' angeordnet.

Ferner umfaßt der Fahrstand ein Armaturenbrett 19 mit im Sichtbereich einer im Sitz 13 aufgenommenen Bedienungsperson angeordneten Anzeigeinstrumenten, die hier indessen im einzelnen nicht interessieren.

Die in den Fig. 2 und 3 für sich allein in perspektivischen Ansichten dargestellte Anzeige- und Bedieneinheit 20 umfaßt ein auf einem Sockel 21 aufgenommenes Gehäuse 22, das rechteckigen Querschnitt hat und eine nach oben weisende Einschuböffnung 23 besitzt. An einer Schmalkante der Einschuböffnung ist am Gehäuse 22 ein um eine Anlenkachse 24 gemäß Drehpfeil 25 zwischen einer die Einschuböffnung 23 abschließenden Nichtgebrauchsstellung gemäß Fig. 3 und der aus Fig. 2 ersichtlichen Lage verschwenkbare Abdeckung angelenkt, bei der es sich um ein Bedienungstableau 26 mit im einzelnen hier nicht interessierenden Funktionstasten handelt.

Die Anzeige- und Bedieneinheit 20 umfaßt ferner ein Display 30, das auf einem dem Innenquerschnitt des Gehäuses 21 angepaßten Einschub 31 aufgenommen und um eine parallel zur Anlenkachse 24 des Bedienungstableaus 26 verlaufende Schwenkachse 32 neigbar gemäß Drehpfeil 33 sowie um eine dazu rechtwinklig verlaufende Hochachse 34 gemäß Drehpfeil 35 verschwenkbar ist. Der Einschub ist seinerseits auf innerhalb des Gehäuses angeordneten - nicht dargestellten - Führungsmitteln vertikal bewegbar geführt, wie dies der Doppelpfeil 36 andeutet, und zusammen mit dem Display 30 in das Gehäuse 22 absenkbar.

In der aus Fig. 3 ersichtlichen Nichtgebrauchsstellung ist der Einschub 31 mit dem darauf angeordneten Display 30 innerhalb des Gehäuses 22 aufgenommen und Letzteres durch Verschwenken des Bedienungstableaus 26 in die Einschuböffnung 23 nach außen abgeschlossen. In nicht dargestellter Weise kann das Bedienungstableau 26 mit einer Verriegelung versehen sein, beispielsweise in Form einer bekannten Schließung.

Fig. 1 zeigt, daß die Anzeige- und Bedieneinheit 20 in Fortsetzung der sich rechtsseitig am Sitzpolster 14 entlang erstreckenden Konsole 17 und damit unmittelbar benachbart zu dem Joystick 18 so angeordnet ist, daß eine im Sitz 13 aufgenommene Bedienungsperson mit der den Joystick 18 führenden Bedienhand durch Betätigen der Funktionstasten 27 des Bedienungstableaus 26 gewünschte Informationen abrufen und auf dem Display 30 sichtbar machen kann, ohne den Sitz zu verlassen und vielfach ohne die Bedienhand vom Joystick 18 nehmen zu müssen, wenn das Bedienungstableau 26 in die aus Fig. 2 ersichtliche Gebrauchsstellung verschwenkt ist.

Ebenfalls im unmittelbaren Zugriffsbereich einer im Sitz 13 aufgenommenen Bedienungsperson befindet sich bei betriebsbereiter Anzeige- und Bedieneinheit 20 das auf dem vertikal bewegbar geführten Einschub 31 angeordnete Display 30. Angesichts dieser Anordnung und der neig- und schwenkbaren Lagerung des Displays um zwei rechtwinklig zueinander verlaufende Achsen 32, 34 gelingt einer im Sitz 13 aufgenommenen Bedienungsperson in einfacher Weise ein Einstellung des Displays 30 derart, daß die auf dem Display zur Anzeige gebrachten Informationen von der Bedienungsperson blendungsfrei wahrgenommen werden können.

Dieser Neig- und Schwenkbarkeit des Displays 30 kommt bei Bedienplätzen der hier in Rede stehenden Art, die häufig in rundum verglasten Kabinen aufgenommen sind, wesentliche Bedeutung insofern zu, als Falschinformationen durch blendungsbedingte Sichtbeeinträchtigungen weitestgehend unterbunden sind.

## Patentansprüche

1. Bedienplatz für Fahrzeuge oder Arbeitsgeräte, insbesondere für Krananlagen, Baumaschinen oder dergleichen mit einem Sitz (13) für eine Bedienungsperson,
mit einem Monitor eines Kontrollsystems und mit Anzeigeinstrumenten im Sichtbereich sowie wenigstens einem gegebenenfalls Mehrfunktions-Bedienelement (18) im unmittelbaren Zugriffsbereich einer im Sitz (13) aufgenommenen Bedienungsperson, bei dem der Monitor als um zwei im Winkel zueinander verlaufende Achsen (32, 33) schwenk- und neigbares Display (30) ausgebildet und im direkten Zugriffs- und Sichtbereich der Bedienungsperson unabhängig vom Sitz (13) befestigt ist, wobei diesem Display ein Bedienungstableau (26) zugeordnet ist,
dadurch gekennzeichnet,
daß dieses Display (30) derart höheneinstellbar ist,
daß es in einer Nichtgebrauchsstellung in einem Aufnahmeraum (22) mit einer verschließbaren Einschuböffnung (23) versenkbar ist, wobei die Einschuböffnung (23) mittels des entsprechend schwenkbar angelenkten Bedientableaus (26) verschließbar ist.

2. Bedienplatz nach Anspruch 1, gekennzeichnet durch eine Anzeige- und Bedieneinheit (20) mit dem Display (30) und mit dem Bedienungstableau (26), das Funktionstasten (27) aufweist und zwischen einer Gebrauchsstellung im unmittelbaren Zugriffsbereich einer im Sitz (13) aufgenommenen Bedienungsperson und einer Nichtgebrauchsstellung verschwenkbar ist.

3. Bedienplatz nach Anspruch 1, gekennzeichnet durch die Aufnahme des Displays (30) auf einem vom Aufnahmeraum (22) und/oder von die Höheneinstellbarkeit vermittelnden Führungselementen trennbaren Einschub (31).

4. Bedienplatz nach Anspruch 3, dadurch gekennzeichnet, daß der Einschub (31) mit elektrischen Steckkontakten versehen ist, die beim Ein- bzw. Ausbau mit Steckaufnahmen des Aufnahmeraums (22) oder der Führungselemente selbsttätig in bzw. außer Kontakt gelangen.

5. Bedienplatz nach einem der Ansprüche 1 bis 4, dadurch gekennzeichnet, daß das Bedientableau (26) im Bereich einer Kante der Einschuböffnung des Aufnahmeraums schwenkbar angelenkt ist und als abschließbare Abdeckung für die Einschuböffnung (23) dient.

6. Bedienplatz nach Anspruch 5, dadurch gekennzeichnet, daß die Funktionstasten (27) des Bedientableaus (26) auf derjenigen Tableauseite angeordnet sind, die bei in die Einschuböffnung (23) des Aufnahmeraums (22), also in die Nichtgebrauchsstellung verschwenktem Tableau zum Aufnahmeraum hinweist.

7. Bedienplatz nach Anspruch 5 oder 6, dadurch gekennzeichnet, daß die Anzeige- und Bedieneinheit (20) für das Kontrollsystem ein säulenartiges Gehäuse (22) mit einem eine obere Einschuböffnung (23) aufweisenden Aufnahmeraum umfaßt.

8. Bedienplatz nach Anspruch 7, dadurch gekennzeichnet, daß die Anzeige- und Bedieneinheit (20) für das Kontrollsystem unmittelbar benachbart zu dem Bedienelement (18) angeordnet ist und daß das Bedientableau (26) auf der zum Sitz (13) für eine Bedienungsperson hinweisenden Seite der Einschuböffnung (23) angelenkt ist sowie in seiner handgerecht einrastenden Gebrauchsstellung im unmittelbaren Zugriffsbereich einer im Sitz aufgenommenen Bedienungsperson steht.

9. Bedienplatz nach einem der vorhergehenden Ansprüche, dadurch gekennzeichnet, daß in einer Betriebsart das Display (30) sich in beiden Achsen nach vorgebbaren Algorithmen, wie Verstellweg, Geschwindigkeit oder dergleichen, automatisch bis zur Unterbrechung der Nachführung durch die Bedienperson verstellt.

10. Bedienplatz nach Anspruch 9, gekennzeichnet durch einen Nachführalgorithmus derart, daß sich das Display (30) mit maximaler Horizontal- und Vertikalgeschwindigkeit durch wechselweise Horizontal- und Vertikalbewegung von einem unteren Anschlag in Richtung auf einen oberen Anschlag verstellt.

## Claims

1. Control station for vehicles or working implements, in particular for crane installations, construction machines or the like, with a seat (13) for an operating person, with a monitor for a control system and with indicating instruments in viewing range as well as at least one, in a given case multifunction operating element (18) in direct access range of an operating person received in the seat (13), in which station the monitor is constructed as a display (30), which is pivotable and inclinable about two axes (32, 33) each extending at an angle to the other and which is fastened independently of the seat (13) and in the direct access and viewing range of the operating person, wherein this display is associated with a control panel (26), characterised thereby, that this display (30) is adjustable vertically in such a manner that it is lowerable in a setting of non-use into a receiving space (22) with a closable slide-in opening (23), wherein the slide-in opening (23) is closable by means of the appropriately pivotably hinged control panel (26).

2. Control station according to claim 1, characterised by a display and control unit (20) with the display (30) and with the control panel (26), which comprises function keys (27) and is pivotable between a position of non-use and a position of use in direct access range of an operating person received in the seat (13).

3. Control station according to claim 1, characterised by the reception of the display (30) on a slide-in unit (31), which is separable from the receiving space (22) and/or from guide elements providing the vertical adjustability.

4. Control station according to claim 3, characterised thereby, that the slide-in unit (31) is provided with electrical plug contacts which automatically get into and out of contact with plug sockets of the receiving space (22) or of the guide elements during the sliding-in or sliding-out, respectively.

5. Control station according to one of the claims 1 to 4, characterised thereby, that the control panel (26) is hinged to be pivotable in the region of an edge of the slide-in opening of the receiving space and serves as closable cover for the slide-in opening (23).

6. Control station according to claim 5, characterised thereby, that the function keys (27) of the control panel (26) are arranged on that side of the panel, which faces the receiving space when the panel is pivoted into the slide-in opening (23) of the receiving space (22), thus into the setting of non-use.

7. Control station according to claim 5 or 6, characterised thereby, that the display and control unit (20) for the control system comprises a columnar housing (22) with a receiving space displaying an upper slide-in opening (23).

8. Control station according to claim 7, characterised thereby, that the display and control unit (20) for the control system is arranged directly adjacent to the operating element (18) and that the control panel (26) is hinged on that side of the slide-in opening (23), which faces the seat (13) for an operating person, as well as in its setting of use stands detented to be handy in the direct access range of an operating person received in the seat.

9. Control station according to one of the preceding claims, characterised thereby, that the display (30) in one mode of operation resets itself in both axes according to presettable algorithms, such as displacement travel, speed or the like, automatically until interruption of the tracking by the operating person.

10. Control station according to claim 9, characterised by a tracking algorithm of such kind that the display (30) resets itself from a lower abutment in the direction towards an upper abutment by alternating horizontal and vertical movement at maximum horizontal and vertical speed.

## Revendications

1. Poste de manoeuvre pour véhicules ou équipements, en particulier pour installations de grue, engins de chantier ou analogues, comportant un siège (13) pour un conducteur, un moniteur d'un système de contrôle, et des instruments indicateurs dans la zone de vision, et au moins un élément de manoeuvre éventuellement à plusieurs fonction (18) dans la zone immédiate d'accès d'un conducteur assis sur le siège (13), où le moniteur est configuré sous forme d'un dispositif d'affichage (30), inclinable et pouvant pivoter autour de deux axes (32, 33) faisant un certain angle l'un avec l'autre, et qui est fixé dans la zone d'accès et de vision directe du conducteur, indépendamment du siège (13), un tableau de manoeuvre (26) étant affecté à ce dispositif d'affichage, caractérisé en ce que ce dispositif d'affichage (30) est réglable en hauteur, de telle sorte qu'il puisse, dans une position de non-utilisation, s'enfoncer dans un logement (22) comportant une ouverture obturable (23) destinée à un tiroir, l'ouverture (23) destinée à un tiroir pouvant être fermée à l'aide du tableau de manoeuvre (26), qui en conséquence est articulé en pivotement.

2. Poste de manoeuvre selon la revendication 1, caractérisé par une unité d'indication et de manoeuvre (20), comportant le dispositif d'affichage (30) et le tableau de manoeuvre (26), qui comporte des touches de fonction (27), et qui peut pivoter entre une position d'utilisation, dans la zone immédiate d'accès d'un conducteur assis sur le siège (13), et une position de non-utilisation.

3. Poste de manoeuvre selon la revendication 1, caractérisé en ce que le dispositif d'affichage (30) est logé sur un tiroir (31), pouvant être séparé du logement (22) et/ou d'éléments de guidage assurant le réglage en hauteur.

4. Poste de manoeuvre selon la revendication 3, caractérisé en ce que le tiroir (31) est pourvu de contacteurs électriques, qui, lors de la mise en place ou de la dépose, entrent automatiquement en contact ou hors contact avec des prises aménagées dans le logement (22) ou les éléments de guidage.

5. Poste de manoeuvre selon l'une des revendications 1 à 4, caractérisé en ce que le tableau de manoeuvre (26) est, dans la zone d'une arête de l'ouverture du logement destinée à un tiroir, articulé en pivotement, et sert de capot, pouvant être fermé, pour l'ouverture (23) destinée à un tiroir.

6. Poste de manoeuvre selon la revendication 5, caractérisé en ce que les touches de fonction (27) du tableau de manoeuvre (26) sont disposées sur le côté du tableau qui, quand le tableau a pivoté dans l'ouverture (23), destinée à un tiroir, du logement (22), c'est-à-dire dans la position de non-utilisation, est dirigé vers le logement.

7. Poste de manoeuvre selon la revendication 5 ou 6, caractérisé en ce que l'unité d'indication et de manoeuvre (20) servant au système de contrôle comporte un carter (22), en forme de colonne, avec un logement comportant une ouverture supérieure (23) destinée à un tiroir.

8. Poste de manoeuvre selon la revendication 7, caractérisé en ce que l'unité d'indication et de manoeuvre (20) servant au système de contrôle est disposée au voisinage immédiat de l'élément de manoeuvre (18), et que le tableau de manoeuvre (26) est articulé sur le côté de l'ouverture (23) destinée à un tiroir, dirigée vers le siège (13) servant à un conducteur, et, dans sa position d'utilisation encliquetée, se trouve dans la zone d'accès immédiate d'un conducteur assis sur le siège.

9. Poste de manoeuvre selon l'une des revendications précédentes, caractérisé en ce que, dans un mode d'exploitation, le dispositif d'affichage (30) s'ajuste automatiquement sur les deux axes, selon des algorithmes pré-définis, tels que le trajet, la vitesse ou analogues, jusqu'à interruption de l'asservissement par le conducteur.

10. Poste de manoeuvre selon la revendication 9, caractérisé par un algorithme d'asservissement, de telle sorte que le dispositif d'affichage (30) se déplace, à une vitesse horizontale et une vitesse verticale maximales, selon un mouvement horizontal et un mouvement vertical alterné, à partir d'une butée inférieure et dans la direction d'une autre butée supérieure.
